(19) Europäisches Patentamt
European Patent Office
Office européen des brevets

(11) EP 4 775 630 A1

(12) **EUROPEAN PATENT APPLICATION**
published in accordance with Art. 153(4) EPC

(43) Date of publication:
**15.07.2026 Bulletin 2026/29**

(21) Application number: **24863240.8**

(22) Date of filing: **06.09.2024**

(51) International Patent Classification (IPC):
***C08L 23/04*** (2006.01) ***C08F 10/02*** (2006.01)

(52) Cooperative Patent Classification (CPC):
(C-Sets available)
**C08F 210/16; C08L 23/04;** C08F 4/65912; C08F 4/65916; C08F 2420/02; C08F 2420/06; C08F 2420/07; C08F 2420/10 (Cont.)

(86) International application number:
**PCT/KR2024/013463**

(87) International publication number:
**WO 2025/053661 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 KR 20230118439**
**05.09.2024 KR 20240121054**

(71) Applicant: **LG CHEM, LTD.**
**Seoul 07336 (KR)**

(72) Inventors:
- **KIM, Jeongsik**
  **Daejeon 34122 (KR)**
- **HONG, Bog Ki**
  **Daejeon 34122 (KR)**
- **KIM, Daehwan**
  **Daejeon 34122 (KR)**
- **KIM, Joongsoo**
  **Daejeon 34122 (KR)**
- **SEO, Jin Seok**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

# (54) POLYETHYLENE COMPOSITION

(57) The present disclosure relates to a polyethylene composition including a virgin polyethylene and a post-consumer waste polyethylene (PCW PE), and having improved environmental stress cracking resistance together with excellent mechanical properties.



Processed by Luminess, 75001 PARIS (FR)

(Cont. next page)

(52) Cooperative Patent Classification (CPC): (Cont.)

C-Sets
**C08F 210/16, C08F 4/65904;**
**C08F 210/16, C08F 4/6592, C08F 4/65925;**
C08F 210/16, C08F 210/14, C08F 2500/06,
C08F 2500/10, C08F 2500/12, C08F 2500/35

## Description

[TECHNICAL FIELD]

**CROSS-REFERENCE TO RELATED APPLICATION(S)**

The present application is based on, and claims priority from, Korean Patent Application Nos. 10-2023-0118439 and 10-2024-0121054, filed on September 6, 2023 and September 5, 2024, respectively, the disclosures of which are hereby incorporated by reference herein in their entirety.

[BACKGROUND]

A demand for polyethylene resins is gradually increasing and polyethylene resins are used in various applications.

In recent years, with increasing environmental concerns, regulations have been tightened to curb carbon dioxide emissions. In particular, as environmental pollution due to the increased use of plastics has emerged as a serious problem, regulations at the manufacturing stage, such as mandatory use of recycled resins, are being strengthened mainly in the United States. Accordingly, manufacturers are required to add more than a predetermined amount of recycled resin when manufacturing resin molded products, etc., and an eco-friendly grade is given according to the content of recycled resin.

However, since a recycled resin has already been processed, properties thereof are already changed through high-temperature processing. Thus, there is a problem in that its impact strength, tensile strength, chemical resistance, and thermal stability are significantly deteriorated, compared to those of an existing virgin resin. To solve this problem, it is attempted that a predetermined level or more of the virgin resin is included in the composition including the recycled resin. However, this requires excessive amounts of virgin resin to minimize the deterioration of mechanical properties, and the issue of deterioration of main properties such as environmental stress cracking resistance (ESCR) and so on has not yet been solved. Furthermore, this issue becomes more serious as the number of processing cycles increases.

[DETAILED DESCRIPTION OF THE INVENTION]

[Technical Problem]

There is provided a polyethylene composition including a virgin polyethylene and a post-consumer waste polyethylene (PCW PE) and having improved environmental stress cracking resistance together with excellent mechanical properties.

[Technical Solution]

According to one embodiment of the present disclosure, there is provided a polyethylene composition including a virgin polyethylene and a post-consumer waste polyethylene (PCW PE), the polyethylene composition satisfying the following (a) to (d):

(a) a density of 0.949 g/cm$^3$ or more,
(b) a melt index ($MI_{2.16}$, ASTM D 1238, 190 °C, 2.16 kg) of 0.25 g/10 min or more,
(c) a complex viscosity ($\eta^*(\omega500)$) of 600 Pa·s or less, as measured at a frequency ($\omega$) of 500 rad/s, and
(d) environmental stress cracking resistance (ESCR) of 200 hours or more, as measured according to ASTM D 1693 (Condition B, F50, Igepal 10%).

[ADVANTAGEOUS EFFECTS]

According to the present disclosure, provided is a polyethylene composition including a virgin polyethylene together with a post-consumer waste polyethylene (PCW PE) while having improved environmental stress cracking resistance together with excellent mechanical properties by optimizing a density, a melt index, and a complex viscosity ($\eta^*(\omega500)$) and by increasing environmental stress cracking resistance (ESCR).

[DETAILED DESCRIPTION OF THE EMBODIMENTS]

In this disclosure, the terminology "the first", "the second", and the like are used to describe a variety of components, and these terms are merely employed to differentiate a certain component from other components.

Further, the terminology used herein is for the purpose of describing particular embodiments only and is not intended to be limiting of the invention. The singular expression may include the plural expression unless it is differently expressed contextually. In this disclosure, it must be understood that the terminology "include," "equip," or "have" in the present description is only used for designating the existence of characteristics taken effect, numbers, steps, components, or combinations thereof, and do not exclude the existence or the possibility of addition of one or more different characteristics, numbers, steps, components, or combinations thereof beforehand.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

In this disclosure, "parts by weight" refers to a relative concept of a ratio of the weights of other materials based on the weight of a specific material. For example, in a mixture containing 50 g of material A, 20 g of material B, and 30 g of material C, the amounts of material B and material C based on 100 parts by weight of material A are 40 parts by weight and 60 parts by weight, respectively.

Further, "% by weight" refers to an absolute concept of expressing the weight of a specific material in percentage based on the total weight. In the above-described mixture, the contents of material A, material B, and material C based on 100% of the total weight of the mixture are 50% by weight, 20% by weight, and 30% by weight, respectively. At this time, a sum of the contents of respective components does not exceed 100% by weight.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

According to one embodiment of the present disclosure, provided is a polyethylene composition including a virgin polyethylene and a post-consumer waste polyethylene (PCW PE) while implementing a high stacking strength with excellent mechanical properties when used as a blow container and also securing excellent processability and a high drop strength at the same time by optimizing a density and a complex viscosity ($\eta^*(\omega500)$) and by increasing environmental stress cracking resistance (ESCR).

Specifically, the polyethylene composition of the present disclosure includes a virgin polyethylene and a post-consumer waste polyethylene (PCW PE) and satisfies the following (a) to (d):

(a) a density of 0.949 g/cm$^3$ or more,
(b) a melt index ($MI_{2.16}$, ASTM D 1238, 190 °C, 2.16 kg) of 0.25 g/10 min or more,
(c) a complex viscosity ($\eta^*(\omega500)$) of 600 Pa·s or less, as measured at a frequency ($\omega$) of 500 rad/s, and
(d) environmental stress cracking resistance (ESCR) of 200 hours or more, as measured according to ASTM D 1693 (Condition B, F50, Igepal 10%).

Hereinafter, the polyethylene composition of the present disclosure will be described in more detail.

The polyethylene composition of the present disclosure is characterized in that a virgin polyethylene and a post-consumer waste polyethylene (PCW PE) are included, a density, a melt index ($MI_{2.16}$), and complex viscosity ($\eta^*(\omega500)$) are optimized, and environmental stress cracking resistance (ESCR) is increased.

In particular, the polyethylene composition may have a density of 0.949 g/cm$^3$ or more, for example, 0.949 g/cm$^3$ or more to 0.954 g/cm$^3$ or less. The polyethylene composition of the present disclosure may secure the excellent density to implement a sufficient stacking strength when used as a blow container, etc. even though including the post-consumer waste polyethylene (PCW PE).

The polyethylene composition of the present disclosure may secure excellent processability and a high drop strength at the same time by optimizing the melt index together with the above-described density.

The polyethylene composition may have a melt index ($MI_{2.16}$, ASTM D 1238, 190 °C, 2.16 kg) of 0.25 g/10 min or more, for example, 0.25 g/10 min to 0.8 g/10 min. Preferably, the melt index ($MI_{2.16}$, ASTM D 1238, 190 °C, 2.16 kg) of the polyethylene composition may be 0.7 g/10 min or less, or 0.65 g/10 min or less, or 0.6 g/10 min or less, or 0.55 g/10 min or less, or 0.5 g/10 min or less, or 0.45 g/10 min or less, or 0.42 g/10 min or less, or 0.4 g/10 min or less, or 0.38 g/10 min or less, and 0.26 g/10 min or more, or 0.27 g/10 min or more, or 0.28 g/10 min or more, or 0.29 g/10 min or more. By having the melt index ($MI_{2.16}$) as described above, the polyethylene composition of the present disclosure may secure excellent mechanical properties such as high stacking strength, as well as excellent processability and a high drop strength at the same time.

Further, the polyethylene composition may have a complex viscosity ($\eta^*(\omega500)$) of 600 Pa·s or less, for example, 500 Pa·s or more to 600 Pa·s or less, as measured at a frequency ($\omega$) of 500 rad/s. Preferably, the complex viscosity ($\eta^*(\omega500)$) of the polyethylene composition may be 585 Pa·s or less, 580 Pa·s or less, 575 Pa·s or less, 570 Pa·s or less, 568 Pa·s or less, 565 Pa·s or less, 562 Pa·s or less, or 560 Pa·s or less, and 505 Pa·s or more, 508 Pa·s or more, 510 Pa·s or

more, 512 Pa·s or more, 515 Pa·s or more, 520 Pa·s or more, 525 Pa·s or more, 530 Pa·s or more, or 535 Pa·s or more, as measured at a frequency (ω) of 500 rad/s. By having the above-described complex viscosity (η*(ω500)), the polyethylene composition of the present disclosure may secure the excellent mechanical properties together with excellent processability and a high drop impact strength at the same time when used as a blow container and so on.

In addition, the polyethylene composition may have a complex viscosity (η*(ω300)) of 850 Pa·s or more, for example, 850 Pa·s or more to 980 Pa·s or less, as measured at a frequency (ω) of 300 rad/s. Preferably, the complex viscosity (η*(ω300)) of the polyethylene composition may be 852 Pa·s or more, 855 Pa·s or more, 858 Pa·s or more, 860 Pa·s or more, or 862 Pa·s or more, and 950 Pa·s or less, 920 Pa·s or less, or 900 Pa·s or less, or 890 Pa·s or less, as measured at a frequency (ω) of 300 rad/s.

Further, the polyethylene composition may have a complex viscosity (η*(ω0.05)) of 38000 Pa·s or more, for example, 38000 Pa·s or more to 53500 Pa·s or less, as measured at a frequency (ω) of 0.05 rad/s. Preferably, the complex viscosity (η*(ω0.05)) of the polyethylene composition may be 38200 Pa·s or more, 38350 Pa·s or more, 38500 Pa·s or more, 38900 Pa·s or more, 40000 Pa·s or more, 42000 Pa·s or more, or 45000 Pa·s or more, and 53000 Pa·s or less, 51500 Pa·s or less, 50000 Pa·s or less, 48000 Pa·s or less, or 45000 Pa·s or less, as measured at a frequency (ω) of 0.05 rad/s.

By having the above-described complex viscosities (η*(ω300) and q*(ω0.05)), the polyethylene composition of the present disclosure may secure the excellent mechanical properties together with excellent processability at the same time when used as a blow container and so on.

The polyethylene composition of the present disclosure is characterized in that the density, the melt index ($MI_{2.16}$), and the complex viscosity (η*(ω500)) are optimized as described above, and environmental stress cracking resistance (ESCR) is increased.

The polyethylene composition may have environmental stress cracking resistance (ESCR) of 200 hours or more, for example, 200 hours or more to 500 hours or less, as measured according to ASTM D 1693 (Condition B, F50, Igepal 10%). Preferably, ESCR of the polyethylene composition may be 203 hours or more, or 210 hours or more, or 215 hours or more, or 220 hours or more, or 250 hours or more, or 260 hours or more, or 270 hours or more, or 280 hours or more, and 400 hours or less, or 350 hours or less, or 320 hours or less, or 300 hours or less, or 288 hours or less. The polyethylene composition of the present disclosure may secure the excellent mechanical properties together with excellent processability and a high drop impact strength at the same time when used as a blow container, etc. due to the excellent ESCR property as described above.

Specifically, the environmental stress cracking resistance (ESCR) is the time to F50 (50% failure) measured for a 2 mm-thick compression molded sample under Condition B at 50 °C using 10% Igepal CO-630 Solution according to ASTM D 1693-07 method.

By optimizing the density and complex viscosity (η*(ω500)) and increasing environmental stress cracking resistance (ESCR) as described above, the polyethylene composition according to the present disclosure may have excellent impact strength, tensile strength, chemical resistance, and thermal stability close to the virgin resin even though the content of post-consumer waste polyethylene is increased, thereby implementing a high stacking strength with excellent mechanical properties when used as a blow container and so on while securing the excellent processability and a high drop strength at the same time.

Meanwhile, the polyethylene composition according to the present disclosure includes the virgin polyethylene and the post-consumer waste polyethylene (PCW PE), and includes, as the virgin resin, a polyethylene with an optimized low molecular weight region ratio while increasing a high-molecular-weight region ratio within the molecular structure along with the density as described below, in order to optimize the density and complex viscosity (η*(ω500)) and to increase environmental stress cracking resistance (ESCR) as described above.

Specifically, the virgin polyethylene may be an ethylene homopolymer or an ethylene/alpha-olefin copolymer, and may be a dry blend of one or more or two or more of the above-described ethylene homopolymers and ethylene/alpha-olefin copolymers.

For example, when one or more or two or more of the above-described ethylene homopolymers and ethylene/alpha-olefin copolymers are dry-blended, a weight ratio of one or more ethylene homopolymers and one or more ethylene/alpha-olefin copolymers may be 1:99 to 99:1, or 5:95 to 95:5, or 10:90 to 90:10, or 15:85 to 85:15, or 20:80 to 80:20, or 25:75 to 75:25, or 30:70 to 70:30, or 35:65 to 65:35, or 40:60 to 60:40, or 45:55 to 55:45.

The alpha-olefin may be one or more selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

For example, when the virgin polyethylene is a copolymer, the alpha-olefin may be included in an amount of about 0.45 mol or less, or about 0.1 mol to about 0.45 mol, or about 0.4 mol or less, or about 0.2 mol to about 0.4 mol, or about 0.35 mol or less, or about 0.25 mol to about 0.35 mol, based on 1 mol of ethylene.

Specifically, when the virgin polyethylene is a copolymer, 1-hexene may be used as the alpha-olefin which is copolymerized with ethylene.

Preferably, the virgin polyethylene may be an ethylene homopolymer that does not include a separate copolymer, an ethylene/1-hexene copolymer, or a dry blend of the above-described ethylene homopolymer and ethylene/1-hexene copolymer.

Meanwhile, the virgin polyethylene may be a high density polyethylene (HDPE) satisfying a density (ASTM D1505, 23 °C) of 0.944 $g/cm^3$ or more or 0.944 $g/cm^3$ to 0.954 $g/cm^3$.

More specifically, the density of the virgin polyethylene may be 0.945 $g/cm^3$ or more, or 0.946 $g/cm^3$ or more, and 0.954 $g/cm^3$ or less, or 0.953 $g/cm^3$ or less.

When the density of the virgin polyethylene satisfies the above-described range, compatibility with the post-consumer waste polyethylene may be improved, and when mixed with the post-consumer waste polyethylene, the deterioration of major properties such as ESCR and so on may be minimized without using an excessive amount of the virgin polyethylene resin.

Meanwhile, the virgin polyethylene has an integral value of an area where the LogMw is 5.5 or more in a GPC curve graph with logMw on an x-axis and dw/dlogMw on a y-axis, being 14% or less or 5% or more to 14% or less of a total integral value.

Specifically, the integral value of the area where the LogMw is 5.5 or more may be less than 14%, or 13.5% or less, or 13% or less so as to secure excellent processability and a high dropping impact strength when mixing the virgin polyethylene with the post-consumer waste polyethylene. However, considering excellent mechanical properties with the high density after mixing with the post-consumer waste polyethylene, the integral value of the area where the LogMw is 5.5 or more may be 6% or more, or 8% or more, or 10% or more, or 11.0% or more.

By having the integral value of the area where the LogMw is 5.5 or more as described above, the high molecular weight region ratio in the molecular structure of the virgin polyethylene may be increased while improving mechanical properties, such as environmental stress cracking resistance (ESCR) and so on, along with excellent compatibility with the post-consumer waste polyethylene.

Further, the virgin polyethylene has a low molecular weight ratio (LogMw≤4.5 / LogMw≥6.0) of 15.5 or more or 15.5 to 50, which is obtained by the following Equation 1 from an integral value (LogMw≤4.5) of an area where the LogMw value is 4.5 or less relative to a total integral value, based on an integral value (LogMw≥6.0) of an area where the LogMw value is 6.0 or more relative to a total integral value, in a GPC curve graph with logMW on an x-axis and dw/dlogMw on a y-axis:

Low molecular weight ratio = LogMw≤4.5 area integral value / LogMw≥6.0 area integral value. [Equation 1]

In this regard, derivation of the low molecular weight content (logMw≤4.5) and high molecular weight content (logMw≥6.0) from the GPC curve graph represents a percentage value of the area corresponding to each range, relative to a total integral value in the GPC curve graph, and the low molecular weight ratio (LogMw≤4.5 / LogMw≥6.0) of Equation 1 according thereto is expressed, without a separate unit, as a ratio of the low molecular content relative to the high molecular content described above.

When the low molecular weight ratio (LogMw≤4.5 / LogMw≥6.0) in the molecular structure of the polyethylene satisfies the above-described range, compatibility with the post-consumer waste polyethylene and processability may be improved.

Specifically, the low molecular weight ratio (LogMw≤4.5 / LogMw≥6.0) of the virgin polyethylene may be 16 or more, or 18 or more, or 20 or more, or 21.5 or more, or 22 or more, or 23.5 or more, or 24 or more, or 24.5 or more, in terms of ensuring excellent processability and compatibility when mixing the polyethylene with the post-consumer waste polyethylene. However, in terms of improving the mechanical properties of the post-consumer waste polyethylene, the low molecular weight ratio (LogMw≤4.5 / LogMw≥6.0) of the virgin polyethylene may be 48 or less, or 46 or less, or 45 or less, or 43 or less, or 42 or less, or 40 or less, or 38 or less, or 37.5 or less.

In addition, the polyethylene satisfies the above-described low molecular weight ratio range (LogMw≤4.5 / LogMw≥6.0), wherein the integral value (LogMw≥6.0) of an area where the LogMw value is 6.0 or more relative to a total integral value may be 0.9% or more to 2.2% or less, or 1.0% or more to 2.0% or less, and the integral value (LogMw≤4.5) of an area where the LogMw value is 4.5 or less relative to a total integral value may be 42% or more to 52% or less, or 44% or more to 50% or less in the GPC curve graph with logMw on an x-axis and dw/dlogMw on a y-axis.

In the polyethylene composition of the present disclosure, the virgin polyethylene has the low molecular weight ratio (LogMw≤4.5 / LogMw≥6.0) as described above, thereby optimizing the low molecular weight region ratio in the molecular structure of the virgin polyethylene to maintain excellent compatibility with the post-consumer waste polyethylene and to improve mechanical properties such as environmental stress cracking resistance (ESCR) and so on.

Meanwhile, the virgin polyethylene may have an optimized molecular weight distribution (MWD, Mw/Mn) by increasing the high molecular weight region ratio in the molecular structure while maintaining the low molecular weight region ratio, as described above.

Specifically, the virgin polyethylene may have a molecular weight distribution (Mw/Mn) of 7 or more or 7 to 18. Preferably, the molecular weight distribution (Mw/Mn) of the polyethylene may be 9 or more, or 10 or more, or 10.5 or more, or 11 or more, or 12 or more, and may also be 17.5 or less, or 17 or less, or 16 or less.

By having the molecular weight distribution (Mw/Mn) as described above, the high molecular weight region ratio in the molecular structure of the virgin polyethylene may be increased while maintaining the low molecular weight region ratio, thereby maintaining excellent compatibility with the post-consumer waste polyethylene while improving mechanical properties such as environmental stress cracking resistance (ESCR) and so on.

For example, the ratio of the area where the LogMw value is 5.0 or more or 4.0 or less in the GPC curve graph and the molecular weight distribution (MWD, polydispersity index) are determined using a gel permeation chromatography (GPC). Specifically, they may be determined by a polystyrene conversion method using a gel permeation chromatography (GPC, manufactured by Water).

Here, the molecular weight distribution (MWD, polydispersity index) may be calculated by determining a weight average molecular weight (Mw) and a number average molecular weight (Mn) of polyethylene, and dividing the weight average molecular weight by the number average molecular weight.

Specifically, PL-GPC220 manufactured by Waters may be used as the gel permeation chromatography (GPC) instrument, and a Polymer Laboratories PLgel MIX-B 300 mm-length column may be used. At this time, the measurement temperature is 160°C, and 1,2,4-trichlorobenzene may be used as a solvent, and applied at a flow rate of 1 mL/min. The polyethylene sample is pretreated by dissolving the same in 1,2,4-trichlorobenzene containing 0.0125% of butylated hydroxytoluene (BHT) at 160°C for 10 hours using a GPC analyzer (PL-GP220), and prepared at a concentration of 10 mg/10 mL, and then fed in an amount of 200 μL. Mw and Mn values may be derived using a calibration curve formed using polystyrene standard specimens. 9 kinds of the polystyrene standard specimens having a weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol may be used.

Further, the virgin polyethylene may have a weight average molecular weight of 100000 g/mol to 500000 g/mol. Preferably, the weight average molecular weight of the polyethylene may be 105000 g/mol or more, or 110000 g/mol or more, or 115000 g/mol or more, or 120000 g/mol or more, or 122000 g/mol or more, or 125000 g/mol or more. However, considering compatibility with the post-consumer waste polyethylene, the weight average molecular weight may be 480000 g/mol or less, or 450000 g/mol or less, or 400000 g/mol or less, or 350000 g/mol or less, or 300000 g/mol or less, or 250000 g/mol or less, or 200000 g/mol or less, or 180000 g/mol or less, or 150000 g/mol or less, or 140000 g/mol or less.

By having the above-described weight average molecular weight (Mw), the molecular weight distribution of the virgin polyethylene may be optimized, and the mechanical properties such as environmental stress cracking resistance (ESCR) and so on may be improved along with excellent compatibility with the post-consumer waste polyethylene.

Meanwhile, in the virgin polyethylene, a melt index may be optimized while optimizing the high molecular weight region ratio in the molecular structure and the molecular weight distribution, as described above.

The virgin polyethylene may have a melt index ($MI_{2.16}$, ASTM D 1238, 190 °C, 2.16 kg) of 0.1 g/10 min to 1.0 g/10 min. Preferably, the melt index ($MI_{2.16}$, ASTM D 1238, 190 °C, 2.16 kg) of the polyethylene may be 0.12 g/10 min or more, or 0.15 g/10 min or more, or 0.2 g/10 min or more, or 0.25 g/10 min or more, or 0.3 g/10 min or more, or 0.32 g/10 min or more, or 0.35 g/10 min or more, 0.4 g/10 min or more, or 0.41 g/10 min or more, and 0.98 g/10 min or less, or 0.95 g/10 min or less, or 0.9 g/10 min or less, or 0.85 g/10 min or less, or 0.8 g/10 min or less, or 0.75 g/10 min or less, or 0.72 g/10 min or less, 0.7 g/10 min or less, or 0.68 g/10 min or less. By having the above-described melt index ($MI_{2.16}$) of the polyethylene, the molecular weight distribution of the polyethylene may be optimized, and the mechanical properties such as environmental stress cracking resistance (ESCR) and so on may be improved along with excellent compatibility with the post-consumer waste polyethylene.

By having the above-described melt index, the molecular weight of the virgin polyethylene may be optimized, and the mechanical properties such as environmental stress cracking resistance (ESCR) and so on may be improved along with excellent compatibility with the post-consumer waste polyethylene.

Meanwhile, the virgin polyethylene may have SCBs per 1000 carbon atoms (/1000TC) of 3.0 or more, as measured at 160 °C using a gel permeation chromatography (GPC)- Fourier Transform Infrared Spectrometer (FTIR). Here, the content of short chain branches (SCB) represents the content of branches of 2 to 7 carbon atoms per 1000 carbon atoms (unit: branches/1000C).

For example, the content of short chain branches (SCB) of the virgin polyethylene may be measured at 160 °C using a PerkinElmer Spectrum 100 FT-IR connected to a high-temperature GPC (PL-GPC220) after pretreating the sample by melting the same in 1, 2, 4-trichlorobenzene containing 0.0125% BHT at 160 °C for 10 hours using PL-SP260.

Further, the virgin polyethylene may have a broad orthogonal comonomer distribution (BOCD) index of 1.60 or more or 1.60 or more to 2.5 or less.

Specifically, the broad orthogonal co-monomer distribution (BOCD) index of the virgin polyethylene may be 1.60 or more, as calculated according to the following Equation 2 by measuring the content of short chain branches (SCB) at the left and right borders of centered 60% area excluding 20% of the left and right ends in a total area in a GPC curve graph of

polyethylene with logMw on an x-axis and dw/dlogMw on a y-axis:

BOCD = (SCB content at high molecular weight side-SCB content at low molecular weight side)/ (LogMw value at high molecular weight side-LogMw at low molecular weight side). [Equation 2]

In this regard, the SCB content at a high molecular weight side and the SCB content at a low molecular weight side mean SCB content values at logMw corresponding to 20% of the high molecular weight side and low molecular weight side areas, respectively. The high molecular weight side logMw and low molecular weight side logMw values are logMw values corresponding to 20% of the high molecular weight and low molecular weight areas, respectively, relative to the total area of the y-axis (dw/dlogMw) and x-axis (logMw) curve through GPC analysis.

In the present disclosure, the virgin polyethylene is a semi-crystalline polymer and may include a crystalline part and an amorphous part. Specifically, the crystalline part may include a lamellar crystal including an ethylene repeating unit or an alpha-olefin repeating unit. More specifically, polymer chains including the ethylene repeating unit or the alpha-olefin repeating unit are folded to make a bundle, thereby forming a crystalline block (or segment) in the lamellar form. The lamellar crystal means a crystalline block in such a lamellar form, and the mechanical properties of the virgin polyethylene may be implemented through such a lamellar crystal.

The ethylene repeating unit means a repeating unit included in a homopolymer of ethylene monomers, and the alpha-olefin repeating unit may mean a repeating unit included in the homopolymer of alpha-olefin monomers. Specific examples of the alpha-olefin monomer are as described above.

Meanwhile, a number of the lamellar crystals may gather together to form a spherulite that has grown three-dimensionally, and at this time, the part outside the lamellar crystals corresponds to the amorphous part. Such an amorphous part mediate the bonding between lamellar crystals in the virgin polyethylene formed as spherulites. The elastic properties of the virgin polyethylene may be realized by this amorphous part. In particular, as the bonding between the lamellar crystals becomes stronger, the entire crystals are well bound. Therefore, the physical properties of the virgin polyethylene, such as environmental stress cracking resistance, may be improved.

In particular, the virgin polyethylene of the present disclosure has a characteristic of excellent environmental stress cracking resistance due to a high lamellar region area.

Here, the lamellar region area represents the surface area of the lamellar structure in the crystal structure of the virgin polyethylene, and as the surface area of lamellar crystal increases, the part connecting the crystal structure increases, and thus crack resistance is excellent.

The virgin polyethylene may have a lamellar region area of $710 \times 10^{10}$ $cm^2$/mol or more, or $710 \times 10^{10}$ $cm^2$/mol or more to $1150 \times 10^{10}$ $cm^2$/mol or less, obtained from the following Equation 3:

[Equation 3]

$$\text{Lamellar region area } (cm^2/mol) = (V_{specific} / Lw) \times Mw \times Tc$$

in Equation 3,

$V_{specific}$ represents a specific volume ($cm^3$/g) of polyethylene crystal,
Mw represents a weight average molecular weight (g/mol) of polyethylene, measured using a gel permeation chromatography (GPC),
Tc represents crystallinity (%) of polyethylene, measured using a differential scanning calorimetry (DSC), and
Lw represents a thickness (cm) of the lamellar crystal structure of polyethylene, measured using a differential scanning calorimetry (DSC).

Specifically, the specific volume ($V_{specific}$) of the polyethylene crystal is 1 $cm^3$/g as a literature value. In addition, the weight average molecular weight (Mw) of the polyethylene may be a value measured by a polystyrene conversion method using gel permeation chromatography (GPC, manufactured by Water) as described above. In addition, the crystallinity (Tc) of the polyethylene may be a value (%) measured based on the melting enthalpy through DSC analysis under conditions of a heating/cooling rate of 10 °C/min in the range of -50 °C or higher to 200 °C or lower. In addition, the thickness (Lw) of the lamellar crystal structure of polyethylene is a value (cm) measured based on an SSA experiment utilizing DSC equipment. For example, in the SSA experiment, the polymer is completely melted and cooled to the melting point (Tm), offset +5 °C, and then annealed while cooling to the Tm onset -5 °C, and then 2nd heating is carried out to calculate the thickness (Lw, Weight-average) of the lamellar crystal structure.

Preferably, the lamellar region area of the virgin polyethylene may be $712 \times 10^{10}$ $cm^2$/mol or more, or $715 \times 10^{10}$ $cm^2$/mol or more, or $720 \times 10^{10}$ $cm^2$/mol or more.

Meanwhile, in the polyethylene composition according to one embodiment of the present disclosure, the above-described virgin polyethylene may be prepared using various catalysts, and preferably, may be prepared using a catalyst composition including a metallocene compound, but is not limited thereto.

For example, the virgin polyethylene may be prepared by introducing hydrogen gas in the presence of a catalyst composition including a first metallocene compound represented by the following Chemical Formula 1 and a second metallocene compound represented by the following Chemical Formula 2:

[Chemical Formula 1] $(Cp^1R^a)_n(Cp^2R^b)M^1Z^1_{3-n}$

in Chemical Formula 1,

$M^1$ is a transition metal of Group 4;
$Cp^1$ and $Cp^2$ are each cyclopentadienyl, which is substituted or unsubstituted with $C_{1-20}$ hydrocarbon;
$R^a$ and $R^b$ are the same as or different from each other, and each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or $C_{2-20}$ heteroaryl including one or more heteroatoms selected from the group consisting of N, O, and S;
$Z^1$ is halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, a substituted or unsubstituted amino group, $C_{2-20}$ alkylalkoxy, or $C_{7-40}$ arylalkoxy; and
n is 1 or 0;

[Chemical Formula 2]

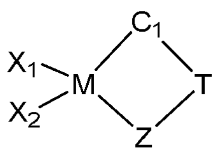

in Chemical Formula 2,
$C_1$ is any one of ligands represented by the following Chemical Formulae 3 to 6,

[Chemical Formula 3]

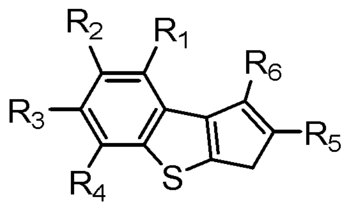

[Chemical Formula 4]

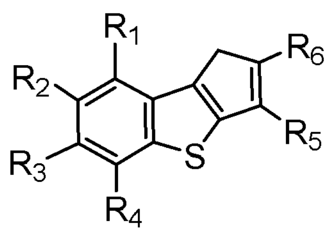

[Chemical Formula 5]

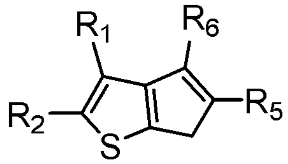

[Chemical Formula 6]

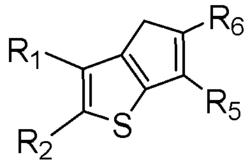

in Chemical Formulae 3 to 6,

$R_1$ to $R_6$ are the same as or different from each other, and each independently, hydrogen, $C_{1-30}$ alkyl, $C_{1-30}$ alkoxy, $C_{2-30}$ alkoxyalkyl, $C_{6-30}$ aryl, $C_{6-30}$ aryloxy, $C_{2-30}$ alkenyl, $C_{2-30}$ alkynyl, $C_{3-30}$ cycloalkyl, $C_{7-40}$ alkylaryl, $C_{8-40}$ alkenylaryl, $C_{8-40}$ alkynylaryl, $C_{7-40}$ arylalkyl, $C_{8-40}$ arylalkenyl, or $C_{8-40}$ arylalkynyl,

M is Ti, Zr, or Hf,

Z is -O-, -S-, $-NR_7-$, or $-PR_7-$,

$R_7$ is hydrogen, $C_{1-30}$ alkyl, $C_{6-30}$ aryl, $C_{2-30}$ alkenyl, $C_{2-30}$ alkynyl, $C_{3-30}$ cycloalkyl, $C_{7-40}$ alkylaryl, $C_{8-40}$ alkenylaryl, $C_{8-40}$ alkynylaryl, $C_{7-40}$ arylalkyl, $C_{8-40}$ arylalkenyl, $C_{8-40}$ arylalkynyl, $C_{1-30}$ alkoxysilyl, $C_{6-30}$ aryloxysilyl, $C_{1-30}$ alkylsilyl, or $C_{1-30}$ silylalkyl,

$X_1$ and $X_2$ are the same as or different from each other, and each independently, halogen, $C_{1-30}$ alkyl, $C_{2-30}$ alkenyl, $C_{7-30}$ alkylaryl, $C_{7-30}$ arylalkyl, $C_{6-20}$ aryl, substituted or unsubstituted $C_{1-30}$ alkylidene, a substituted or unsubstituted amino group, $C_{2-30}$ alkylalkoxy, or $C_{7-30}$ arylalkoxy,

T is

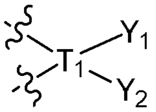

or

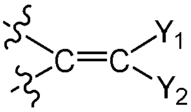

,

$T_1$ is C, Si, Ge, Sn, or Pb,

$Y_1$ is hydrogen, $C_{1-30}$ alkyl, $C_{1-30}$ alkoxy, $C_{2-30}$ alkoxyalkyl, $C_{6-30}$ aryl, $C_{6-30}$ aryloxy, $C_{2-30}$ alkenyl, $C_{2-30}$ alkynyl, $C_{3-30}$ cycloalkyl, $C_{7-40}$ alkylaryl, $C_{8-40}$ alkenylaryl, $C_{8-40}$ alkynylaryl, $C_{7-40}$ arylalkyl, $C_{8-40}$ arylalkenyl, or $C_{8-40}$ arylalkynyl, silyl ($-SiH_3$), $C_{1-30}$ alkoxysilyl, $C_{2-30}$ alkoxyalkylsilyl, $C_{6-30}$ aryloxysilyl, $C_{1-30}$ haloalkyl, $C_{6-30}$ haloaryl, or $-NR_9R_{10}$,

$Y_2$ is $C_{2-30}$ alkoxyalkyl, or $C_{7-40}$ aryloxyalkyl, and

$R_9$ and $R_{10}$ are each independently hydrogen, $C_{1-30}$ alkyl, $C_{6-30}$ aryl, $C_{2-30}$ alkenyl, $C_{2-30}$ alkynyl, $C_{3-30}$ cycloalkyl, $C_{7-40}$ alkylaryl, $C_{8-40}$ alkenylaryl, $C_{8-40}$ alkynylaryl, $C_{7-40}$ arylalkyl, $C_{8-40}$ arylalkenyl, or $C_{8-40}$ arylalkynyl, or connected to each other to form an aliphatic or aromatic ring.

Unless otherwise specified herein, the following terms may be defined as follows.

The halogen may be fluorine (F), chlorine (Cl), bromine (Br), or iodine (I).

The $C_{1-30}$ alkyl group may be a linear, branched, or cyclic alkyl group. Specifically, the $C_{1-20}$ alkyl group may be a $C_{1-15}$ linear alkyl group; a $C_{1-10}$ linear alkyl group; a $C_{1-5}$ linear alkyl group; a $C_{3-20}$ branched or cyclic alkyl group; a $C_{3-15}$ branched or cyclic alkyl group; or a $C_{3-10}$ branched or cyclic alkyl group. More specifically, the $C_{1-20}$ alkyl group may be a methyl group, an ethyl group, an n-propyl group, an isopropyl group, an n-butyl group, an isobutyl group, a tert-butyl group, an n-pentyl group, an iso-pentyl group, a neo-pentyl group, a cyclohexyl group, or the like.

The $C_{2-30}$ alkenyl group may be a linear, branched, or cyclic alkenyl group. Specifically, the $C_{2-30}$ alkenyl group may be a $C_{2-20}$ linear alkenyl group, a $C_{2-10}$ linear alkenyl group, a $C_{2-5}$ linear alkenyl group, a $C_{3-20}$ branched alkenyl group, a $C_{3-15}$ branched alkenyl group, a $C_{3-10}$ branched alkenyl group, a $C_{5-20}$ cyclic alkenyl group, or a $C_{5-10}$ cyclic alkenyl group. More specifically, the $C_{2-20}$ alkenyl group may be an ethenyl group, a propenyl group, a butenyl group, a

pentenyl group, a cyclohexenyl group, or the like.

The $C_{6-30}$ aryl may be a monocyclic, bicyclic, or tricyclic aromatic hydrocarbon. Specifically, the $C_{6-30}$ aryl may be phenyl, naphthyl, anthracenyl, or the like.

The $C_{7-40}$ alkylaryl may include substituents in which one or more hydrogens of the aryl are substituted with alkyl. Specifically, the $C_{7-40}$ alkylaryl may be methylphenyl, ethylphenyl, n-propylphenyl, iso-propylphenyl, n-butylphenyl, iso-butylphenyl, tert-butylphenyl, cyclohexylphenyl, or the like.

The $C_{7-40}$ arylalkyl may include substituents in which one or more hydrogens of the alkyl are substituted with aryl. Specifically, the $C_{7-40}$ arylalkyl may be benzyl, phenylpropyl, phenylhexyl, or the like.

The $C_{1-20}$ alkoxy may include methoxy, ethoxy, phenyloxy, cyclohexyloxy or the like, but is not limited thereto.

The $C_{2-20}$ alkoxyalkyl group may be a functional group in which one or more hydrogens of the alkyl group as described above are substituted with alkoxy, and specifically, may include alkoxyalkyl such as methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, or the like; or aryloxyalkyl such as phenoxyhexyl, or the like, but is not limited thereto.

The $C_{1-20}$ alkylsilyl group or the $C_{1-20}$ alkoxysilyl group may be a functional group in which one to three hydrogens of $-SiH_3$ are substituted with one to three alkyl groups or alkoxy groups as described above, and specifically, may include alkylsilyl such as methylsilyl, dimethylsilyl, trimethylsilyl, dimethylethylsilyl, diethylmethylsilyl, dimethylpropylsilyl, or the like; alkoxysilyl such as methoxysilyl, dimethoxysilyl, trimethoxysilyl, dimethoxyethoxysilyl, or the like; alkoxyalkylsilyl such as methoxydimethylsilyl, diethoxymethylsilyl, dimethoxypropylsilyl, or the like, but is not limited thereto.

The $C_{1-20}$ silylalkyl group is a functional group in which one or more hydrogens of the alkyl group as described above are substituted with silyl, and specifically, may include $-CH_2-SiH_3$, methylsilylmethyl, dimethylethoxysilylpropyl, or the like, but is not limited thereto.

The sulfonate group has a structure of $-O-SO_2-R'$, wherein R' may be a $C_{1-20}$ alkyl group. Specifically, the $C_{1-20}$ sulfonate group may include a methanesulfonate group, a phenylsulfonate group, or the like, but is not limited thereto.

The heteroaryl is $C_{2-20}$ heteroaryl including one or more of N, O, and S as a heteroatom, and specific examples thereof may include xanthene, thioxanthen, thiophene, furan, pyrrole, imidazole, thiazole, oxazole, oxadiazole, triazole, pyridyl, bipyridyl, pyrimidyl, triazine, acridyl, pyridazine, pyrazinyl, quinolinyl, quinazoline, quinoxalinyl, phthalazinyl, pyrido pyrimidinyl, pyrido pyrazinyl, pyrazino pyrazinyl, isoquinoline, indole, carbazole, benzoxazole, benzoimidazole, benzothiazole, benzocarbazole, benzothiophene, dibenzothiophene, benzofuranyl, phenanthroline, isooxazolyl, thiadiazolyl, phenothiazinyl, dibenzofuranyl, or the like, but is not limited thereto.

The above-described substituents may be optionally, within a range exhibiting the identical or similar effect to the desired effect, substituted with one or more substituents selected from the group consisting of hydroxyl; halogen; alkyl, alkenyl, aryl, or alkoxy; alkyl, alkenyl, aryl, or alkoxy including one or more heteroatoms among heteroatoms of Group 14 to 16; silyl; alkylsilyl or alkoxysilyl; phosphine; phosphide; sulfonate; and sulfone.

In this disclosure, "two neighboring substituents are connected with each other to form an aliphatic or aromatic ring" means that the atom(s) of two substituents and the atom(s) to which the two substituents are bonded are connected with each other to form a ring. Specifically, $R_9$ and $R_{10}$ of $-NR_9R_{10}$ are connected to each other to form an aliphatic ring, which may be exemplified by piperidinyl or the like. $R_9$ and $R_{10}$ of $-NR_9R_{10}$ are connected to each other to form an aromatic ring, which may be exemplified by pyrrolyl or the like.

The Group 4 transition metal may be titanium (Ti), zirconium (Zr), hafnium (Hf), or the like, but are not limited thereto.

For example, the first metallocene compound represented by Chemical Formula 1 is a non-crosslinked compound containing ligands of $Cp^1$ and $Cp^2$, and the ligands of $Cp^1$ and $Cp^2$ may be the same as or different from each other, and are each cyclopentadienyl, and may be substituted with 1 or more, or 1 to 3 $C_{1-10}$ alkyl.

Further, the ligands of $Cp^1$ and $Cp^2$ may easily control, for example, characteristics of the olefin polymer to be prepared, such as chemical structure, molecular weight, molecular weight distribution, mechanical properties, transparency and so on, by controlling the effect of steric hindrance according to the kind of substituted functional groups. Specifically, the ligands of $Cp^1$ and $Cp^2$ may be substituted with $R^a$ and $R^b$, respectively. In this regard, $R^a$ and $R^b$ are the same as or different from each other, and each independently, hydrogen, $C_{1-20}$ alkyl, $C_{2-20}$ alkoxyalkyl, $C_{7-40}$ arylalkyl, or $C_{2-12}$ heteroaryl including one or more heteroatoms selected from the group consisting of N, O, and S, and more specifically, $C_{1-10}$ alkyl, $C_{2-10}$ alkoxyalkyl, $C_{7-20}$ arylalkyl, or $C_{4-12}$ heteroaryl including one or more heteroatoms selected from the group consisting of N, O, and S.

$M^1Z^1_{3-n}$ exists between the ligands of $Cp^1$ and $Cp^2$, and $M^1Z^1_{3-n}$ may affect storage stability of a metal complex. To more effectively ensure the effect, $Z^1$ may be each independently halogen or $C_{1-20}$ alkyl, and more specifically, each independently F, Cl, Br, or I. Further, $M^1$ may be Ti, Zr, or Hf; Zr or Hf; or Zr.

The first transition metal compound may be a compound having Chemical Formula 1, wherein $Cp^1$ and $Cp^2$ are each unsubstituted or substituted cyclopentadienyl, $R^a$ and $R^b$ are each independently hydrogen, $C_{1-10}$ alkyl, $C_{2-10}$ alkoxyalkyl, or $C_{7-20}$ arylalkyl, at least one of $R^a$ and $R^b$ is a substituent of alkoxyalkyl such as t-butoxyhexyl, more specifically, $-(CH_2)n-OR$ (wherein R is a linear or branched alkyl group having 1 to 6 carbon atoms, and n is an integer of 2 to

4).

The first metallocene compound represented by Chemical Formula 1 may be, for example, a compound represented by any one of the following structural formulae, but is not limited thereto:

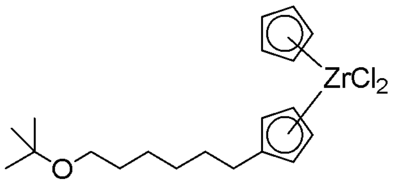
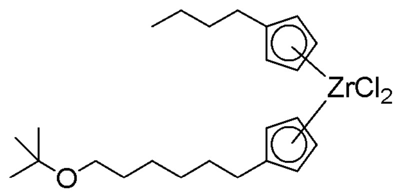
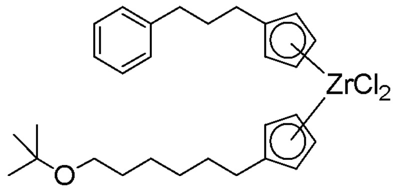
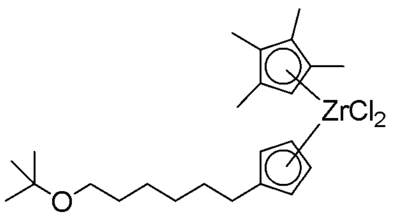
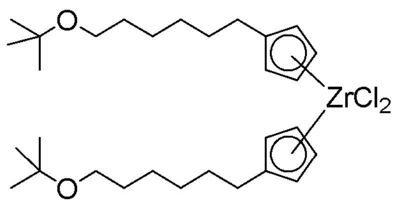
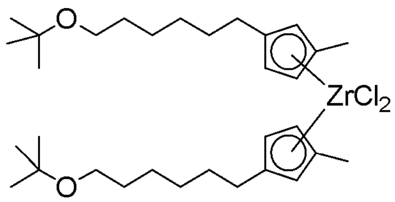

Further, the second metallocene compound may include an aromatic cyclic compound including thiophene and a base compound including Group 14 or 15 element as different ligands, and may have a structure in which the different ligands are crosslinked by -T-, and $M(X_1)(X_2)$ exists between the different ligands.

Specifically, in Chemical Formula 2, M may be Ti, Zr, or Hf, and more specifically, Ti.

$R_1$ to $R_4$ may be each independently hydrogen, or $C_{1-20}$ alkyl, and more specifically, hydrogen or methyl.

$R_5$ and $R_6$ may be each independently $C_{1-10}$ alkyl, and more specifically, both of $R_5$ and $R_6$ may be methyl.

Z may be $-NR_7-$, wherein $R_7$ may be $C_{1-10}$ alkyl, more specifically, $C_{3-10}$ branched alkyl such as t-butyl.

In addition, T is

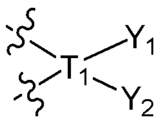
,

$T_1$ is C or Si, $Y_1$ is $C_{1-20}$ alkyl, $C_{1-20}$ alkoxy, $C_{2-20}$ alkoxyalkyl, $C_{6-20}$ aryl, $C_{7-30}$ alkylaryl, $C_{7-30}$ arylalkyl, $C_{6-20}$ aryloxy, or $C_{7-30}$ aryloxyalkyl, $Y_2$ is $C_{2-20}$ alkoxyalkyl, or $C_{7-30}$ aryloxyalkyl, and more specifically, $Y_1$ may be any one of methyl, ethyl, n-propyl, and n-butyl, and $Y_2$ is $C_{2-20}$ alkoxyalkyl, or $C_{7-30}$ aryloxyalkyl, and more specifically, $Y_2$ may be any one of methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, and phenoxyhexyl.

$X_1$ and $X_2$ may be each independently halogen or $C_{1-20}$ alkyl, and more specifically, chloro.

For example, the second metallocene compound may be exemplified by compounds represented by the following Chemical Formulae 2a to 2d:

[Chemical Formula 2a]

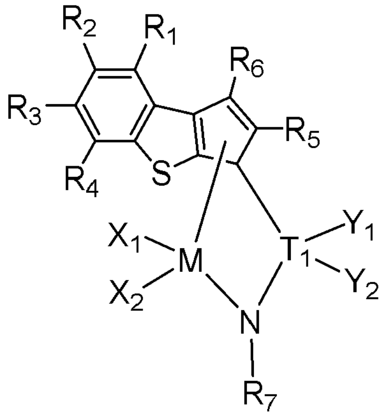

[Chemical Formula 2b]

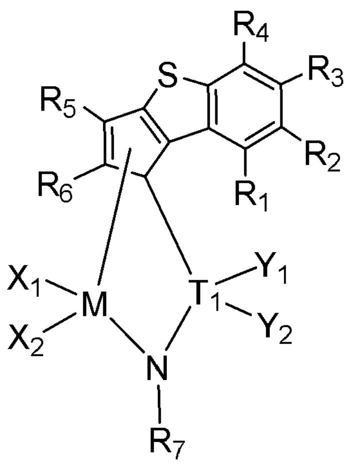

[Chemical Formula 2c]

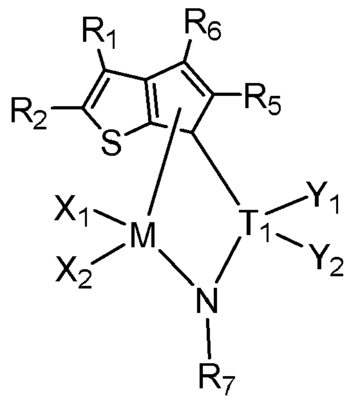

[Chemical Formula 2d]

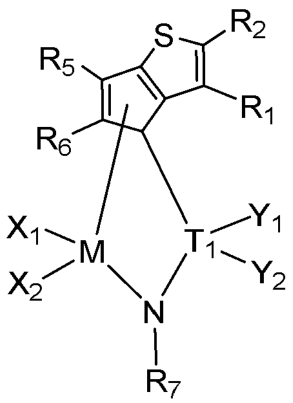

In Chemical Formulae 2a to 2d, $R_1$ to $R_7$, M, $X_1$, $X_2$, $T_1$, $Y_1$ and $Y_2$ are the same as defined above.

Specifically, in Chemical Formulae 2a to 2d of the second metallocene compound, M is Ti, Zr, or Hf, and more specifically Ti; $R_1$ to $R_4$ are each independently hydrogen, or $C_{1-20}$ alkyl, and more specifically, hydrogen or methyl; $R_5$ and $R_6$ are each independently $C_{1-10}$ alkyl, and more specifically, both of $R_5$ and $R_6$ are methyl; $R_7$ is $C_{1-10}$ alkyl, and more specifically, $C_{3-10}$ branched alkyl such as t-butyl; $T_1$ is C or Si, $Y_1$ is $C_{1-20}$ alkyl, $C_{1-20}$ alkoxy, $C_{2-20}$ alkoxyalkyl, $C_{6-20}$ aryl, $C_{7-30}$ alkylaryl, $C_{7-30}$ arylalkyl, $C_{6-20}$ aryloxy, or $C_{7-30}$ aryloxyalkyl, $Y_2$ is $C_{2-20}$ alkoxyalkyl, or $C_{7-30}$ aryloxyalkyl, and more specifically, $Y_1$ is any one of methyl, ethyl, n-propyl, and n-butyl, $Y_2$ is $C_{2-20}$ alkoxyalkyl, or $C_{7-30}$ aryloxyalkyl, and more specifically, $Y_2$ is any one of methoxymethyl, methoxyethyl, ethoxymethyl, iso-propoxymethyl, iso-propoxyethyl, iso-propoxyhexyl, tert-butoxymethyl, tert-butoxyethyl, tert-butoxyhexyl, and phenoxyhexyl, $X_1$ and $X_2$ are each independently halogen or $C_{1-20}$ alkyl, and more specifically, chloro.

In particular, specific examples of the second metallocene compound may be exemplified by compounds having the following structures, but are not limited thereto:

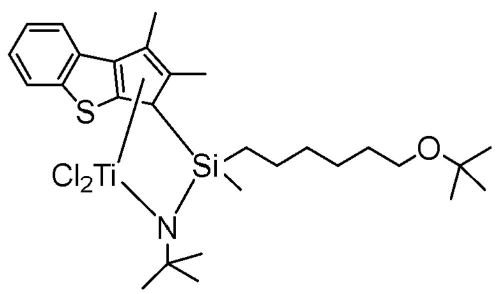

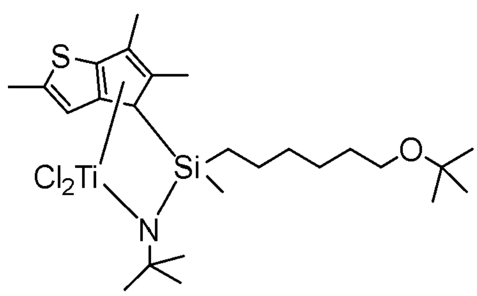

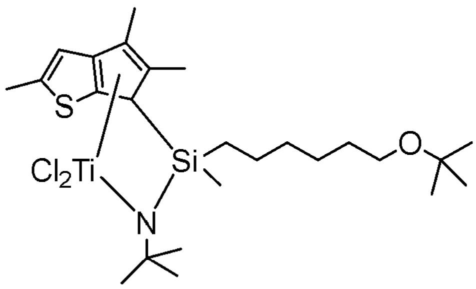

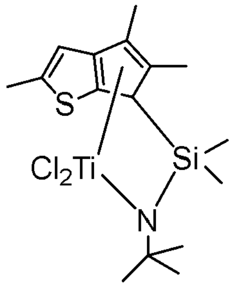

Meanwhile, a content ratio of the first and second metallocene compounds in the catalyst composition may be included at a molar ratio of 1:1.1 to 1:5, and more specifically, 1:1.1 or more, or 1:1.2 or more, or 1:1.3 or more, and 1:5 or less, or 1:3 or less.

In addition, the catalyst composition may further include a carrier, and in this case, the first and second metallocene compounds may be used in the state of being supported on the carrier.

Specific examples of the carrier include silica, alumina, magnesia, silica-alumina, silica-magnesia, or the like, and commonly, these supports may further include oxides, carbonates, sulfates, and nitrates, such as $Na_2O$, $K_2CO_3$, $BaSO_4$, and $Mg(NO_3)_2$ and so on.

Further, the catalyst composition may further include a cocatalyst in terms of improving high activity and process stability. The cocatalyst may be more specifically an alkylaluminoxane-based cocatalyst such as methylaluminoxane, ethylaluminoxane, isobutylaluminoxane, or butylaluminoxane, etc.

In the polyethylene composition according to one embodiment of the present disclosure, the above-described virgin polyethylene is prepared by polymerizing ethylene using the above-described catalyst composition, and the polymerization process may be performed by a monomodal (or unimodal) polymerization process in which polymerization is performed under a single polymerization reaction condition using a single catalyst in one reactor, and more specifically, performed in the presence of the above-described hybrid supported catalyst in one loop-type slurry reactor.

In this regard, the polymerization temperature may be 25 °C to 500 °C, preferably 25 °C to 200 °C, and more preferably 50 °C to 150 °C. Further, the polymerization pressure may be 1 $Kgf/cm^2$ to 100 $Kgf/cm^2$, preferably 1 $Kgf/cm^2$ to 50 $Kgf/cm^2$, and more preferably 5 $Kgf/cm^2$ to 30 $Kgf/cm^2$.

Meanwhile, the polyethylene composition according to the present disclosure includes the post-consumer waste polyethylene (PCW PE) along with the above-described virgin polyethylene.

Specifically, the polyethylene composition of the present disclosure may include 10% by weight to 90% by weight of the post-consumer waste polyethylene (PCW PE). In particular, in terms of enhancing the effect of suppressing carbon dioxide emissions of the polyethylene composition and reducing costs, the content of the post-consumer waste polyethylene (PCW PE) may be 20% by weight or more, or 30% by weight or more, or 35% by weight or more, or 40% by weight or more, or 45% by weight or more, or 50% by weight or more, or 55% by weight or more. Further, in terms of improving mechanical properties of the polyethylene composition, such as impact strength, tensile strength, chemical resistance and thermal stability, etc. while minimizing the content of the virgin resin, the content of the post-consumer waste polyethylene (PCW PE) may be 85% by weight or less, or 80% by weight or less, or 75% by weight or less, or 70% by weight or less, or 65% by weight or less, or 60% by weight or less.

The post-consumer waste polyethylene (PCW PE) may have a melt index ($M1_{2.16}$, 190 °C, measured under a load of 2.16 kg) of 0.10 g/10 min to 0.3 g/10 min, specifically, 0.12 g/10 min to 0.28 g/10 min, or 0.13 g/10 min to 0.25 g/10 min, or 0.15 g/10 min to 0.2 g/10 min.

The post-consumer waste polyethylene (PCW PE) may be characterized by having a density of 0.951 $g/cm^3$ to 0.953 $g/cm^3$.

The post-consumer waste polyethylene (PCW PE) may have environmental stress cracking resistance (ESCR) of 40 hours to 50 hours, as measured according to ASTM D 1693 (Condition B, F50, Igepal 10%).

In the polyethylene composition according to the present disclosure, the post-consumer waste polyethylene is used along with the above-described virgin polyethylene, and the density and complex viscosity ($\eta^*(\omega500)$) are optimized and environmental stress cracking resistance (ESCR) is increased, thereby manufacturing a molded article having excellent processability and high mechanical properties.

In particular, the polyethylene composition according to the present disclosure may secure excellent impact strength, tensile strength, chemical resistance, and thermal stability close to the virgin resin even though the content of post-consumer waste polyethylene is increased.

Specifically, the polyethylene composition is manufactured into a disc specimen having a diameter of 50 mm and a thickness of 2 mm by an injection molding machine, and a weight is dropped on the disc specimen with a drop energy of 4.2 J. When the number of drops until a crack occurs is measured, the drop impact strength may be 7 times or more.

The polyethylene composition may have a flexural modulus of 13000 $kgf/cm^2$ or more, or 13500 $kgf/cm^2$ to 14800 $kgf/cm^2$, as measured according to the ASTM D 790 method. Preferably, in terms of implementing mechanical properties and impact resistance when used as a blow container, the polyethylene composition may have a flexural modulus of 13100 $kgf/cm^2$ or more, or 13200 $kgf/cm^2$ or more, or 13300 $kgf/cm^2$ or more, or 13400 $kgf/cm^2$ or more, or 13500 $kgf/cm^2$ or more. However, in terms of also implementing excellent processability when the polyethylene composition is used as a blow container, the flexural modulus may be 14700 $kgf/cm^2$ or less, or 14600 $kgf/cm^2$ or less, or 14500 $kgf/cm^2$ or less, or 14300 $kgf/cm^2$ or less, or 14000 $kgf/cm^2$ or less, or 13900 $kgf/cm^2$ or less, or 13800 $kgf/cm^2$ or less, or 13700 $kgf/cm^2$ or less, or 13600 $kgf/cm^2$ or less.

Hereinafter, preferred exemplary embodiments will be provided for better understanding of the present invention. However, the following exemplary embodiments are provided only for understanding the present invention more easily, but the content of the present invention is not limited thereby.

**<Examples>**

**Example 1: Preparation of polyethylene composition**

Dry blending of 50% by weight of a virgin polyethylene and 50% by weight of a post-consumer waste polyethylene (PCW PE) was performed, and extruded through a twin screw extruder to prepare a polyethylene composition (PCR Compound).

The post-consumer waste polyethylene (Baeksan Natural product of Baeksan Plastic Co., Ltd.) used at this time had a melt index $MI_{2.16}$ (measured under a load of 2.16 kg at 190 °C according to ASTM D 1238 (condition E)) of about 0.15 g/10 min to about 0.2 g/10 min, a density (measured according to ASTM D 1505 standard) of about 0.951 $g/cm^3$ to about 0.953 $g/cm^3$, and an ESCR (time to F50 (50% destruction) measured at a temperature of 50 °C using 10% Igepal CO-630 Solution according to ASTM D 1693) of about 40 hours to about 50 hours.

In addition, with regard to the virgin polyethylene used at this time, 15 kg/h of isobutane and 33 kg/h of ethylene were injected, and 195 ppm or 200 ppm of hydrogen along with 0.8 wt% and 2.2 wt% of comonomer (1-hexene) , respectively, was used to perform copolymerization processes in the presence of a catalyst (a molar ratio of a first metallocene compound and a second metallocene compound = 1:1.3) in which the first metallocene compound (1) and the second metallocene compound (2) were hybrid-supported on a silica support (Grace Davison, SP2212) in a single slurry loop reactor. Afterwards, the reactants were passed through a solvent removal facility and a dryer. Then, the obtained high-density ethylene/1-hexene copolymers in powder forms were dry-blended to prepare a high-density virgin polyethylene (HDPE) in a powder form. The specific physical properties of the virgin polyethylene thus prepared are as shown in Table 1 below.

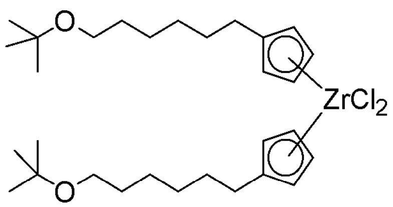
(1)

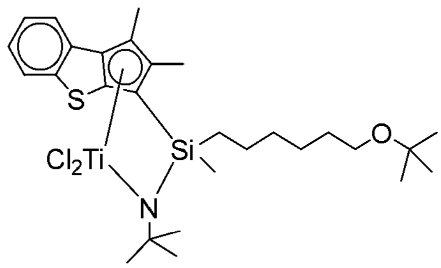
(2)

**Example 2: Preparation of polyethylene composition**

A polyethylene composition (PCR Compound) was prepared in the same manner as in Example 1, except that a polyethylene resin having physical properties shown in Table 1 below was used as the virgin polyethylene to be used together with the above-described post-consumer waste polyethylene (Baeksan Natural product of Baeksan Plastic Co., Ltd.) to prepare a polyethylene composition of Example 2.

The virgin polyethylene used at this time was prepared in the same manner as in Example 1, except that 230 ppm of hydrogen along with 2.0 wt% of comonomer (1-hexene) was used to perform a copolymerization alone to prepare a high-density virgin polyethylene (HDPE) in a powder form.

**Example 3: Preparation of polyethylene composition**

A polyethylene composition (PCR Compound) was prepared in the same manner as in Example 1, except that a polyethylene resin having physical properties shown in Table 1 below was used as the virgin polyethylene to be used

together with the above-described post-consumer waste polyethylene (Baeksan Natural product of Baeksan Plastic Co., Ltd.) to prepare a polyethylene composition of Example 3.

The virgin polyethylene used at this time was prepared in the same manner as in Example 1, except that 145 ppm of hydrogen along with 1.7 wt% of comonomer (1-hexene) was used to perform a copolymerization alone, and then dry-blended with an ethylene homopolymer-based high-density polyethylene product (ME9180 product of LG Chem) having a density of 0.958 g/cm$^3$ and a melt index ($MI_{2.16}$) of 18 g/10 min to prepare a high-density virgin polyethylene (HDPE) in a powder form.

**Comparative Example 1: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 1.

The virgin polyethylene used at this time was prepared in the same manner as in Example 1, except that 222 ppm of hydrogen along with0.8 wt% of comonomer (1-hexene) was used to perform a copolymerization alone to prepare a high-density virgin polyethylene (HDPE) in a powder form.

**Comparative Example 2: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 2.

The virgin polyethylene used at this time was prepared in the same manner as in Example 1, except that 145 ppm of hydrogen along with 1.7 wt% of comonomer (1-hexene) was used to perform a copolymerization alone to prepare a high-density virgin polyethylene (HDPE) in a powder form.

**Comparative Example 3: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 3.

The virgin polyethylene used at this time was prepared in the same manner as in Example 1, except that 222 ppm of hydrogen along with 0.8 wt% of comonomer (1-hexene) was used to perform a copolymerization alone, and then dry-blended with a high-density polyethylene product (ME8000 product of LG Chem) having a density of 0.957 g/cm$^3$ and a melt index ($MI_{2.16}$) of 8 g/10 min to prepare a high-density virgin polyethylene (HDPE) in a powder form.

**Comparative Example 4: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 4.

As the virgin polyethylene used at this time, an ethylene/1-hexene copolymer-based high-density polyethylene product (SP988 product of LG Chem) having a density of 0.941 g/cm$^3$ and a melt index ($MI_{2.16}$) of 0.6 g/10 min and an ethylene homopolymer-based high-density polyethylene product (ME6000 product of LG Chem) having a density of 0.961 g/cm$^3$ and a melt index ($MI_{2.16}$) of 5.5 g/10 min were dry-blended with to prepare a high-density virgin polyethylene (HDPE) in a powder form.

**Comparative Example 5: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 5.

The virgin polyethylene used at this time was prepared in the same manner as in Example 1, except that 240 ppm

of hydrogen along with 2.9 wt% of comonomer (1-hexene) was used to perform a copolymerization alone, and then dry-blended with a high-density polyethylene product (SP988 product of LG Chem) having a density of 0.941 g/cm$^3$ and a melt index ($MI_{2.16}$) of 0.6 g/10 min to prepare a high-density virgin polyethylene (HDPE) in a powder form.

**Comparative Example 6: Preparation of polyethylene composition**

A polyethylene composition (PCR Compound) was prepared in the same manner as in Example 1, except that a polyethylene resin having physical properties shown in Table 2 below was used as the virgin polyethylene to be used together with the above-described post-consumer waste polyethylene (Baeksan Natural product of Baeksan Plastic Co., Ltd.) to prepare a polyethylene composition of Comparative Example 6.

The virgin polyethylene used at this time was prepared in the same manner as in Example 1, except that 240 ppm or 222 ppm of hydrogen and 2.9 wt% or 0.8 wt% of comonomer (1-hexene) were used to perform copolymerization, respectively and then the obtained ethylene/1-hexene copolymer was dry-blended to prepare a high-density virgin polyethylene (HDPE) in a powder form.

**<Experimental Example>**

Physical properties of the virgin polyethylenes (HDPE) used in Examples and Comparative Examples and the polyethylene compositions (PCR Compounds) prepared thereby were evaluated by the following methods, and the measurement results are shown in Tables 1 and 2 below.

**(1) Density**

Densities (g/cm$^3$) of the virgin polyethylenes (HDPE) and the polyethylene compositions (PCR Compounds) were measured according to the American Society for Testing and Materials (ASTM) D 1505 standard.

**(2) Weight average molecular weight and Molecular weight distribution (PDI, polydispersity index, Mw/Mn) and LogMw (5.5 or more and low molecular weight) ratio according to GPC analysis**

With respect to the virgin polyethylenes (HDPE), a weight average molecular weight (Mw) and a number average molecular weight (Mn) of the polymer were measured using a gel permeation chromatography (GPC, manufactured by Waters), and a molecular weight distribution (PDI, Mw/Mn) was determined by dividing the weight average molecular weight by the number average molecular weight.

Specifically, Waters' PL-GPC220 was used as the gel permeation chromatography (GPC) instrument, and a Polymer Laboratories PLgel MIX-B 300 mm-length column was used. At this time, the measurement temperature was 160°C, and 1,2,4-trichlorobenzene was used as a solvent, and applied at a flow rate of 1 mL/min. Each of the polymer samples according to Examples and Comparative Examples was pretreated by dissolving the same in 1,2,4-trichlorobenzene containing 0.0125% of butylated hydroxytoluene (BHT) at 160°C for 10 hours using a GPC analyzer (PL-GP220), and prepared at a concentration of 10 mg/10 mL, and then fed in an amount of 200 μL. Mw and Mn values were derived using a calibration curve formed using polystyrene standard specimens. 9 kinds of the polystyrene standard specimens having a weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol were used.

Further, a ratio (LogMw≥5.5, unit: %) of an integral value of an area where the LogMw value is 5.5 or more relative to a total integral value in a log graph with respect to the weight average molecular weight (Mw) of the virgin polyethylene (HDPE) thus measured through GPC analysis, i.e., in a GPC curve graph with logMW on an x-axis and dw/dlogMw on a y-axis, was calculated and shown in Tables 1 and 2 below. Further, an integral value (LogMw≥6.0, uni: %)) of an area where the LogMw value is 6.0 or more and an integral value (LogMw≤4.5, unit : %)) of an area where the LogMw value is 4.5 or less, relative to a total integral value, in the GPC curve graph were obtained in the same manner as above, and a low molecular weight ratio was calculated as in the following Equation 1, and shown in Tables 1 and 2 below:

Low molecular weight ratio = LogMw≤4.5 area integral value / LogMw≥6.0 area integral value. [Equation 1]

In this regard, derivation of the low molecular weight content (logMw≤4.5) and high molecular weight content (logMw≥6.0) from the GPC curve graph represents a percentage value of the area corresponding to each range, relative to a total integral value in the GPC curve graph.

**(3) SCB**

With respect to the virgin polyethylenes (HDPE), SCB (/1000TC) was measured at 160 °C using a GPC-FTIR instrument.

Specifically, the sample was pretreated by melting the same in 1, 2, 4-trichlorobenzene containing 0.0125% BHT at 160 °C for 10 hours using PL-SP260, and then measured at 160 °C using a PerkinElmer Spectrum 100 FT-IR connected to a high-temperature GPC (PL-GPC220).

**(4) BOCD**

BOCD was calculated according to the following Equation 2 by measuring the content of short chain branches (SCB) at the left and right borders of centered 60% area excluding 20% of the left and right ends in a total area in the log graph with respect to the weight average molecular weight (Mw) of the virgin polyethylene (HDPE) measured through GPC analysis as described above, i.e., in the GPC curve graph with logMW on an x-axis and dw/dlogMw on a y-axis:

BOCD = (SCB content at high molecular weight side-SCB content at low molecular weight side)/(LogMw value at high molecular weight side-LogMw at low molecular weight side). [Equation 2]

In this regard, the SCB content at a high molecular weight side and the SCB content at a low molecular weight side mean SCB content values at logMw corresponding to 20% of the high molecular weight side and low molecular weight side areas, respectively. The high molecular weight side logMw and low molecular weight side logMw values are logMw values corresponding to 20% of the high molecular weight and low molecular weight areas, respectively, relative to the total area of the y-axis (dw/dlogMw) and x-axis (logMw) curve through GPC analysis.

**(5) Lamellar area**

Lamellar area ($\times 10^{10}$ $cm^2$/mol) was measured for the virgin polyethylenes (HDPE) according to Equation 3 below:

[Equation 3]

$$\text{Lamellar region area } (cm^2/mol) = (V_{specific} / Lw) \times Mw \times Tc$$

in Equation 3,

- $V_{specific}$ represents a specific volume ($cm^3$/g) of polyethylene crystal,
- Mw represents a weight average molecular weight (g/mol) of polyethylene, measured using a gel permeation chromatography (GPC),
- Tc represents crystallinity (%) of polyethylene, measured using a differential scanning calorimetry (DSC), and
- Lw represents a thickness (cm) of the lamellar crystal structure of polyethylene, measured using a differential scanning calorimetry (DSC).

Here, the specific volume ($V_{specific}$) of the polyethylene was 1 $cm^3$/g as a literature value. In addition, the weight average molecular weight (Mw) of the polyethylene was a value measured by a polystyrene conversion method using a gel permeation chromatography (GPC, manufactured by Water) as described above. In addition, the crystallinity (Tc) of the polyethylene was a value (%) measured based on the melting enthalpy through DSC analysis under conditions of a heating/cooling rate of 10 °C/min in the range of -50 °C or higher to 200 °C or lower. In addition, the thickness (Lw) of the lamellar crystal structure of polyethylene is a value (cm) measured based on an SSA experiment utilizing DSC equipment. At this time, in the SSA experiment, the polymer was completely melted and cooled to the melting point (Tm), offset +5 °C, and then annealed while cooling to the Tm onset -5 °C, and then $2^{nd}$ heating was carried out to calculate the thickness (Lw, Weight-average) of the lamellar crystal structure.

The values measured using the above-described method were rounded down to the nearest $10^{10}$, and expressed as the lamellar region area ($cm^2$/mol) of virgin polyethylene in Table 1 below.

**(6) Complex viscosity**

Complex viscosity (500 rad/s, Pa.s) of the polyethylene composition (PCR Compound) was measured at 190 °C

and 500 rad/s using ARES-G2 instrument.

**(7) Drop impact**

A disc was manufactured based on the polyethylene composition (PCR Compound) using the following method, and a weight was dropped on the disc, and the number of times cracks occurred within the disc was measured and expressed as the drop impact (times) in Tables 1 and 2 below.

**7-1. Manufacturing of drop impact disc**

- The disc was manufactured using an injection molding machine, and manufactured by injecting the PCR compound after setting the temperature gradient from 210 °C or higher to 230 °C or lower.
- Disc size (Φ 50 mm, thickness 2 mm).

**7-2. Test of drop impact**

- Instron 9450 (Impact Drop Tower) product was used to fix the disc and the weight was dropped to measure the number of times cracks occurred (drop energy fixed at 4.2 J).

**(8) ESCR**

The time to F50 (50% failure) was measured for a 2 mm-thick compression molded sample of the polyethylene composition (PCR Compound) under Condition B at a temperature of 50 °C using 10% Igepal CO-630 Solution according to ASTM D 1693-07 method, and shown as ESCR(hr) in Tables 1 and 2 below.

**(9) Melt index**

The melt indices ($MI_{2.16}$) of the virgin polyethylene (HDPE) and the polyethylene composition (PCR Compound) were measured at 190 °C under a load of 2.16 kg according to the American Society for Testing and Materials standard ASTM D 1238 (Condition E), and expressed as the weight (g) of the polymer melted and discharged for 10 minutes.

**(10) Flexural modulus**

The flexural modulus ($kgf/cm^2$) of the polyethylene composition (PCR Compound) was measured according to the ASTM D 790 method.

[Table 1]

| | | Example 1 | Example 2 | Example 3 |
|---|---|---|---|---|
| Virgin polyethylene (HDPE) | Density ($g/cm^3$) | 0.946 | 0.944 | 0.945 |
| | $MI_{2.16}$ (g/10 min) | 0.45 | 0.68 | 0.41 |
| | Weight average molecular weight (g/mol) | 137800 | 127400 | 138300 |
| | LogMw≥6.0 (%) | 1.3 | 1.4 | 1.8 |
| | LogMw≥5.5 (%) | 11.8 | 11.6 | 12.5 |
| | LogMw≤4.5 (%) | 48.3 | 49.1 | 44.7 |
| | Low molecular weight ratio (%) | 37.1 | 35.4 | 24.9 |
| | SCB (/1000TC) | 4.1 | 3.3 | 3.1 |
| | BOCD | 2.22 | 1.93 | 1.62 |
| | Crystallinity (%) | 71.2 | 70.7 | 71 |
| | Lamellar thickness (nm) | 13.6 | 12.3 | 13.8 |
| | Lamellar area ($cm^2/mol$, $x10^{10}$) | 721 | 732 | 712 |
| Polyethylene composition (PCR Compound, Post-consumer waste polyethylene +Virgin polyethylene) | Density ($g/cm^3$) | 0.949 | 0.949 | 0.949 |
| | $MI_{2.16}$ (g/10 min) | 0.29 | 0.38 | 0.25 |
| | Complex Viscosity (500rad/s, Pa.s) | 516 | 562 | 558 |
| | Complex Viscosity (0.05rad/s, Pa.s) | 51467 | 38957 | 44508 |
| | Complex Viscosity (300rad/s, Pa.s) | 864 | 885 | 855 |
| | ESCR (hr) | 285 | 285 | 203 |
| | Drop impact strength (times) | 9 | 10 | 7 |
| | Flexural Modulus ($kgf/cm^2$) | 13500 | 13400 | 13600 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Virgin polyethylene (HDPE) | Density ($g/cm^3$) | 0.947 | 0.943 | 0.948 | 0.944 | 0.943 | 0.943 |
| | $MI_{2.16}$ (g/10 min) | 0.17 | 0.21 | 0.29 | 0.73 | 0.54 | 0.73 |
| | Weight average molecular weight (g/mol) | 202700 | 170500 | 167800 | 120100 | 125100 | 120000 |
| | LogMw≥6.0 (%) | 4.2 | 2.8 | 3.2 | 0.9 | 1.2 | 1.3 |
| | LogMw≥5.5 (%) | 18.9 | 16.4 | 14.7 | 8.9 | 11.7 | 11 |
| | LogMw≤4.5 (%) | 39.9 | 43.1 | 41.2 | 31.1 | 46.3 | 50.3 |
| | Low molecular weight ratio (%) | 9.4 | 15.2 | 12.8 | 36.1 | 37.1 | 39 |
| | SCB (/1000TC) | 2.3 | 3.4 | 1.8 | 3.5 | 4.8 | 5.2 |
| | BOCD | 0.9 | 1.39 | 0.87 | 1.53 | 2.52 | 2.96 |
| | Crystallinity | 71.5 | 70.2 | 72.2 | 70.5 | 69.8 | 70 |
| | Lamellar thickness (nm) | 13 | 11.9 | 17.3 | 12 | 11.7 | 11.5 |
| | Lamellar area ($cm^2$/mol, $x^{10}$) | 1115 | 1006 | 699 | 706 | 746 | 730 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Polyethylene composition (PCR Compound, Post-consumer waste polyethylene +Virgin polyethylene) | Density ($g/cm^3$) | 0.950 | 0.946 | 0.949 | 0.949 | 0.947 | 0.946 |
| | $MI_{2.16}$ (g/10 min) | 0.15 | 0.18 | 0.21 | 0.33 | 0.24 | 0.33 |
| | Complex Viscosity (500rad/s, Pa.s) | 654 | 616 | 571 | 681 | 579 | 543 |
| | Complex Viscosity (0.05rad/s, Pa.s) | 47639 | 58850 | 57404 | 33229 | 34364 | 37338 |
| | Complex Viscosity (300rad/s, Pa.s) | 877 | 895 | 932 | 781 | 724 | 753 |
| | ESCR (hr) | 450 | 710 | 170 | 90 | 306 | 255 |
| | Drop impact strength (times) | 5 | 6 | 5 | 12 | 9 | 9 |
| | Flexural Modulus ($kgf/cm^2$) | 13500 | 12000 | 13400 | 13500 | 12100 | 11900 |

According to the results of Table 1, it was confirmed that the polyethylene compositions of Examples 1 to 3 of the present disclosure had excellent effects. Specifically, the polyethylene compositions of Examples 1 to 3 of the present disclosure, in which the density and complex viscosity ($\eta^*(\omega 500)$) were optimized and the environmental stress cracking resistance (ESCR) was increased, even though 50% by weight of the post-consumer waste polyethylene (PCW PE) was blended, showed the superior effects to implement the high stacking strength with the excellent mechanical properties when used as a blow container, while securing the excellent processability and the high drop strength at the same time.

In contrast, referring to Table 2, Comparative Examples 1 to 6 did not secure mechanical properties capable of implementing the high stacking strength, and the excellent processability and high drop impact strength at the same time. Specifically, Comparative Example 1 showed that LogMw≥5.5 and low molecular weight ratio of the virgin polyethylene (HDPE) decreased, and the viscosity and drop impact of the polyethylene composition (PCR Compound) decreased. Further, Comparative Example 2 showed that the density, LogMw≥5.5, and low molecular weight ratio of the virgin polyethylene (HDPE) decreased, and the density, viscosity, and drop impact strength of the polyethylene composition (PCR Compound) decreased. Comparative Example 3 showed that LogMw≥5.5, SCB, BOCD, and lamellar area of the virgin polyethylene (HDPE) decreased, and all the drop impact strength and ESCR of the polyethylene composition (PCR Compound) decreased. Further, Comparative Example 4 had problems that BOCD and lamellar area of the virgin polyethylene (HDPE) decreased, and ESCR of the polyethylene composition (PCR Compound) decreased, and long-term physical properties deteriorated when used as a blow container. Comparative Examples 5 and 6 showed that that the density of the virgin polyethylene (HDPE) decreased, and the density of the polyethylene composition (PCR Compound) decreased, and thus it was difficult to implement a sufficient stacking strength when used as a blow container.

## Claims

1. A polyethylene composition comprising a virgin polyethylene and a post-consumer waste polyethylene (PCW PE), the polyethylene composition satisfying the following (a) to (d):

(a) a density of 0.949 g/cm$^3$ or more,
(b) a melt index ($MI_{2.16}$, ASTM D 1238, 190 °C, 2.16 kg) of 0.25 g/10 min or more,
(c) a complex viscosity ($\eta^*(\omega500)$) of 600 Pa·s or less, as measured at a frequency ($\omega$) of 500 rad/s, and
(d) environmental stress cracking resistance (ESCR) of 200 hours or more, as measured according to ASTM D 1693 (Condition B, F50, Igepal 10%).

**2.** The polyethylene composition according to Claim 1, wherein the (a) density of the polyethylene composition is 0.949 g/cm$^3$ to 0.954 g/cm$^3$.

**3.** The polyethylene composition according to Claim 1, wherein the (b) melt index ($MI_{2.16}$, ASTM D 1238, 190 °C, 2.16 kg) of the polyethylene composition is 0.25 g/10 min to 0.8 g/10 min.

**4.** The polyethylene composition according to Claim 1, wherein the (c) complex viscosity ($\eta^*(\omega500)$) of the polyethylene composition is 500 Pa·s to 600 Pa·s.

**5.** The polyethylene composition according to Claim 1, wherein the (d) environmental stress cracking resistance (ESCR) of the polyethylene composition is 200 hours to 500 hours.

**6.** The polyethylene composition according to Claim 1, wherein the virgin polyethylene comprises an ethylene homopolymer or an ethylene/alpha-olefin copolymer.

**7.** The polyethylene composition according to Claim 6, wherein the alphaolefin comprises one or more selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

**8.** The polyethylene composition according to Claim 1, wherein the virgin polyethylene has a density of 0.944 g/cm$^3$ or more.

**9.** The polyethylene composition according to Claim 1, wherein the virgin polyethylene has an integral value of an area where LogMw is 5.5 or more in a GPC curve graph of the polyethylene with logMw on an x-axis and dw/dlogMw on a y-axis, being 14% or less of a total integral value.

**10.** The polyethylene composition according to Claim 1, wherein the virgin polyethylene has a low molecular weight ratio (LogMw≤4.5 / LogMw≥6.0) of 15.5 or more, which is obtained by the following Equation 1 from an integral value (LogMw≤4.5) of an area where LogMW value is 4.5 or less relative to a total integral value, based on an integral value (LogMw≥6.0) of an area where the LogMW value is 6.0 or more relative to a total integral value, in a GPC curve graph with logMW on an x-axis and dw/dlogMw on a y-axis:

Low molecular weight ratio = LogMw≤4.5 area integral value / LogMw≥6.0 area integral value. [Equation 1]

**11.** The polyethylene composition according to Claim 1, wherein the virgin polyethylene has a melt index ($MI_{2.16}$) of 0.1 g/10 min to 1.0 g/10 min, as measured at 190 °C under a load of 2.16 kg according to ASTM D 1238.

**12.** The polyethylene composition according to Claim 1, wherein the virgin polyethylene has SCB per 1000 carbon atoms (/1000TC) of 3.0 or more, as measured at 160 °C using a GPC-FTIR spectrometer.

**13.** The polyethylene composition according to Claim 1, wherein the virgin polyethylene has a broad orthogonal comonomer distribution (BOCD) index of 1.60 or more.

**14.** The polyethylene composition according to Claim 1, wherein the virgin polyethylene has a lamellar region area of 710 $\times$ 10$^{10}$ cm$^2$/mol or more.

**15.** The polyethylene composition according to Claim 1, comprising 10% by weight to 90% by weight of the post-consumer waste polyethylene (PCW PE).

**16.** The polyethylene composition according to Claim 1, wherein the post-consumer waste polyethylene (PCW PE) has a

melt index ($MI_{2.16}$) of 0.15 g/10 min to 0.2 g/10 min, as measured at 190 °C under a load of 2.16 kg according to ASTM D 1238.

**17.** The polyethylene composition according to Claim 1, wherein the post-consumer waste polyethylene (PCW PE) has a density of 0.951 g/cm$^3$ to 0.953 g/cm$^3$.

**18.** The polyethylene composition according to Claim 1, wherein the post-consumer waste polyethylene (PCW PE) has environmental stress cracking resistance (ESCR) of 40 hours to 50 hours, as measured according to ASTM D 1693 (Condition B, F50, Igepal 10%).

## INTERNATIONAL SEARCH REPORT

International application No. **PCT/KR2024/013463**

**A. CLASSIFICATION OF SUBJECT MATTER**

**C08L 23/04**(2006.01)i; **C08F 10/02**(2006.01)i

According to International Patent Classification (IPC) or to both national classification and IPC

**B. FIELDS SEARCHED**

Minimum documentation searched (classification system followed by classification symbols)

C08L 23/04(2006.01); C08F 210/16(2006.01); C08L 23/06(2006.01); C08L 23/08(2006.01); C10G 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 신재 폴리에틸렌(virgin polyethylene), 재생 폴리에틸렌(PCW PE, post consumer waste polyethylene), 밀도(density), 용융 지수(melt index), 복소 점도(complex viscosity), 내환경 응력 균열성(ESCR, environmental stress crack resistance)

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0048349 A (DOW GLOBAL TECHNOLOGIES LLC) 11 April 2023 (2023-04-11) See claims 1-15; and paragraphs [0152]-[0167]. | 1-18 |
| A | US 2023-0050126 A1 (EQUISTAR CHEMICALS, LP) 16 February 2023 (2023-02-16) See claims 1-20. | 1-18 |
| A | US 2017-0107364 A1 (TOTAL RESEARCH & TECHNOLOGY FELUY) 20 April 2017 (2017-04-20) See claims 1-19. | 1-18 |
| A | US 2023-0272195 A1 (EXXONMOBIL CHEMICAL PATENTS INC.) 31 August 2023 (2023-08-31) See claims 1-19. | 1-18 |
| A | US 2023-0114045 A1 (BOREALIS AG) 13 April 2023 (2023-04-13) See claims 1-19. | 1-18 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 December 2024** | **18 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/013463**

| Patent document cited in search report | Publication date (day/month/year) | Patent family member(s) | Publication date (day/month/year) |
|---|---|---|---|
| KR 10-2023-0048349 A | 11 April 2023 | CA 3187547 A1 | 10 February 2022 |
| | | CN 116113648 A | 12 May 2023 |
| | | EP 4192890 A1 | 14 June 2023 |
| | | JP 2023-538501 A | 08 September 2023 |
| | | MX 2023001295 A | 19 April 2023 |
| | | US 2023-0272196 A1 | 31 August 2023 |
| | | WO 2022-031398 A1 | 10 February 2022 |
| US 2023-0050126 A1 | 16 February 2023 | CA 3222497 A1 | 29 December 2022 |
| | | CA 3222504 A1 | 29 December 2022 |
| | | CA 3222508 A1 | 29 December 2022 |
| | | CA 3222509 A1 | 29 December 2022 |
| | | CA 3222511 A1 | 29 December 2022 |
| | | EP 4359466 A1 | 01 May 2024 |
| | | EP 4359467 A1 | 01 May 2024 |
| | | EP 4359468 A1 | 01 May 2024 |
| | | EP 4359469 A2 | 01 May 2024 |
| | | EP 4359470 A2 | 01 May 2024 |
| | | JP 2024-524129 A | 05 July 2024 |
| | | JP 2024-524130 A | 05 July 2024 |
| | | JP 2024-524131 A | 05 July 2024 |
| | | JP 2024-526561 A | 19 July 2024 |
| | | JP 2024-526562 A | 19 July 2024 |
| | | KR 10-2024-0024852 A | 26 February 2024 |
| | | KR 10-2024-0046864 A | 11 April 2024 |
| | | KR 10-2024-0046865 A | 11 April 2024 |
| | | KR 10-2024-0046866 A | 11 April 2024 |
| | | KR 10-2024-0046867 A | 11 April 2024 |
| | | MX 2024000055 A | 20 February 2024 |
| | | MX 2024000056 A | 21 February 2024 |
| | | MX 2024000061 A | 23 February 2024 |
| | | MX 2024000062 A | 23 February 2024 |
| | | MX 2024000063 A | 23 February 2024 |
| | | US 2022-0402187 A1 | 22 December 2022 |
| | | US 2022-0402188 A1 | 22 December 2022 |
| | | US 2022-0410458 A1 | 29 December 2022 |
| | | US 2023-0023978 A1 | 26 January 2023 |
| | | WO 2022-271700 A1 | 29 December 2022 |
| | | WO 2022-271705 A2 | 29 December 2022 |
| | | WO 2022-271705 A3 | 09 February 2023 |
| | | WO 2022-271715 A1 | 29 December 2022 |
| | | WO 2022-271720 A2 | 29 December 2022 |
| | | WO 2022-271720 A3 | 16 February 2023 |
| | | WO 2022-271726 A1 | 29 December 2022 |
| US 2017-0107364 A1 | 20 April 2017 | EP 3074464 A1 | 05 October 2016 |
| | | EP 3074464 B1 | 19 April 2017 |
| | | US 10053563 B2 | 21 August 2018 |
| | | WO 2016-005265 A1 | 14 January 2016 |
| US 2023-0272195 A1 | 31 August 2023 | CN 115989275 A | 18 April 2023 |
| | | EP 4204465 A1 | 05 July 2023 |
| | | WO 2022-047449 A1 | 03 March 2022 |

Form PCT/ISA/210 (patent family annex) (July 2022)

**INTERNATIONAL SEARCH REPORT**
**Information on patent family members**

International application No.
**PCT/KR2024/013463**

| Patent document cited in search report | Publication date (day/month/year) | Patent family member(s) | Publication date (day/month/year) |
|---|---|---|---|
| US 2023-0114045 A1 | 13 April 2023 | CN 114829481 A | 29 July 2022 |
| | | CN 114829481 B | 08 December 2023 |
| | | EP 4077531 A1 | 26 October 2022 |
| | | KR 10-2022-0117909 A | 24 August 2022 |
| | | KR 10-2715405 B1 | 11 October 2024 |
| | | TW 202126754 A | 16 July 2021 |
| | | TW I763170 B | 01 May 2022 |
| | | WO 2021-122299 A1 | 24 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230118439
- KR 1020240121054